# EUROPEAN PATENT APPLICATION

(11) **EP 2 306 687 A1**
(43) Date of publication of application: **06.04.2011**
(21) Application number: 10174621.2
(22) Date of filing: 31.08.2010
(51) Int. Cl.: H04L 29/08

(54) **Image forming apparatus, method of providing user interface contents thereof, and host apparatus**

(30) Priority: 02.09.2009 KR 20090082590; 01.06.2010 KR 20100051765
(71) Applicant: SAMSUNG ELECTRONICS CO., LTD., Suwon-si, Gyeonggi-do (KR)
(72) Inventor: KANG, Soo-young, Seoul (KR); LEE, Sang-hyup, Gyeonggi-do (KR)
(74) Representative: Hewett, Jonathan Michael Richard

(57) **Abstract**

An image forming apparatus is provided that includes an interface unit to interface at least one host apparatus with the image forming apparatus, a web server unit to generate UI contents displayed on a graphical user interface (GUI) using a web-based language and store the generated UI contents, and a first display unit to display the stored UI contents using a web browser. Accordingly, the image forming apparatus may generate UI contents of the UI window of the image forming apparatus using a web-based language, generate a screen which is the same as the screen displayed on the UI of the image forming apparatus, and provide the screen to a host apparatus. Thus, user convenience may be improved.

## Description

The present invention relates to an image forming apparatus, a method of providing user interface (UI) contents thereof, and a host apparatus, and more particularly, to an image forming apparatus which generates UI contents using a web-based language, a method of providing UI contents thereof, and a host apparatus.

An image forming apparatus is an apparatus to generate, print, receive and transmit image data, and the examples of the image forming apparatus include a printer, a scanner, a copier, a fax machine, and a multi-functional printer combining the functions of the above apparatuses.

An external host apparatus may check information regarding the state of an image forming apparatus using an application or remote user interface (RUI). The application or the RUI of the external host apparatus may check the state of the current image forming apparatus and notify the state to a user. However, there is limit to the information provided to the user through the application or the RUI.

Accordingly, there needs to be a method in which the image forming apparatus provides a screen which is the same as the screen provided through a UI window formed on one portion of the image forming apparatus to the external host apparatus, so that a user may check the screen from the external host apparatus.

Since the UI contents of the UI window of the image forming apparatus, however, are generated using languages such as C or JAVA, the external host apparatus equipped with a browser may not display the UI contents of the UI window of the image forming apparatus appropriately.

Aspects of the present invention relate to an image forming apparatus to generate UI contents using a web-based language, a method of providing UI contents thereof, and a host apparatus.

Other aspects of the present invention relate to an image forming apparatus to generate the same screen as that displayed on the UI of the image forming apparatus and provide the screen to a host apparatus, a method of providing UI contents thereof and a host apparatus.

An image forming apparatus, according to an exemplary embodiment, includes an interface unit to interface at least one host apparatus with the image forming apparatus, a web server unit to generate UI contents displayed on a graphical user interface (GUI) using a web-based language and store the generated UI contents, and a first display unit to display the stored UI contents using a web browser.

The image forming apparatus further includes a control unit which, if the at least one host apparatus connects to the web server unit using the web browser and requests same user interface (UI) contents displayed on the GUI, controls the interface unit to provide the requested UI contents to the connected host apparatus.

The UI contents displayed on the GUI and the UI contents provided to the connected host apparatus may be displayed on a second display unit of the connected host apparatus in a same manner.

The interface unit may receive a user's command from the connected host apparatus, and the control unit may control the image forming apparatus to operate to correspond to the UI contents displayed on the second display unit according to the received user's command.

The user's command may include at least one of performing a job executable by the image forming apparatus and editing a predetermined setting value of the image forming apparatus.

The editing of the setting value may be at least one of viewing, changing, storing, and performing the setting value.

The control unit may control the interface unit to transmit operation result of the image forming apparatus operated according to the user command to the connected host apparatus.

If the at least one host apparatus is connected, the web server unit may register the connected host apparatus and checks connection status of the registered host apparatus periodically.

The web server unit may authenticate the connected host apparatus and register the authenticated host apparatus.

A method of providing UI contents of an image forming system, according to an exemplary embodiment, includes generating UI contents displayed on GUI using a web-based language, storing the generated UI contents, and displaying the stored UI contents using a web browser.

The method may further include, if the at least one host apparatus connects to the web server unit using a web browser and requests same UI contents displayed on the GUI, providing the requested UI contents to the connected host apparatus.

The UI contents displayed on the GUI and the UI contents provided to the connected host apparatus may be displayed on a second display unit of the connected host apparatus in a same manner.

The method may further include receiving a user's command from the connected host apparatus, and controlling the image forming apparatus to operate to correspond to UI contents displayed on the second display unit according to the received user's command.

The user's command may include at least one of performing a job executable by the image forming apparatus and editing a predetermined setting value of the image forming apparatus.

The editing of a setting value may include at least one of viewing, changing, storing, and performing a setting value.

The method may further include transmitting operation result of the image forming apparatus operated according to the user's command to the connected host apparatus.

The method may further include, if the at least one host apparatus connects to the web server unit using a web browser, registering the connected host apparatus and checking connection status of the registered host apparatus periodically.

The registering may include authenticating the connected host apparatus and registering the authenticated host apparatus.

A host apparatus, according to an exemplary embodiment, includes a second display unit to display UI contents on a web browser, an interface unit, if the host apparatus connects to the web server unit using a web browser, to receive UI contents generated using a web-based language from the web server, and a control unit to control the second display unit to display the received UI contents on the web browser.

The UI contents displayed on GUI of the first display unit and the received UI contents may be displayed on the second display unit in a same manner..

The control unit may control the interface unit to transmit a signal to operate the image forming apparatus according to a user command in accordance with the UI contents displayed on the second display unit to the image forming apparatus.

The user command may include at least one of operating a job executable by the image forming apparatus and editing a predetermined setting value of the image forming apparatus.

The editing of a setting value may include at least one of viewing, changing, storing, and performing a setting value of the image forming apparatus.

The control unit may control the second display unit to receive an operation result of the image forming apparatus which is operated according to the user command and display the operation result on the second display unit.

These and/or other aspects and advantages will become apparent and more readily appreciated from the following description of the embodiments, taken in conjunction with the accompanying drawings of which:
FIG. 1 is a view illustrating an image forming apparatus according to an exemplary embodiment;
FIG. 2 is a view illustrating a web server unit in greater detail;
FIG. 3 is a view illustrating a host apparatus according to an exemplary embodiment;
FIGS. 4A to 4C are views illustrating various UI screens;
FIG. 5 is a flow chart illustrating a method of providing UI contents of an image forming apparatus according to an exemplary embodiment;
FIG. 6 is a flow chart illustrating a method of providing UI contents of an image forming system according to an exemplary embodiment;
FIG. 7 is a flow chart illustrating a method of processing an occurred event in an image forming apparatus according to an exemplary embodiment;
FIG. 8 is a flow chart illustrating a method of processing an image forming job requested by a host apparatus according to an exemplary embodiment; and
FIG. 9 is a flow chart illustrating operations performed by a session management unit.

Reference will now be made in detail to the exemplary embodiments, examples of which are illustrated in the accompanying drawings, wherein like reference numerals refer to like elements throughout. The embodiments are described below by referring to the figures.

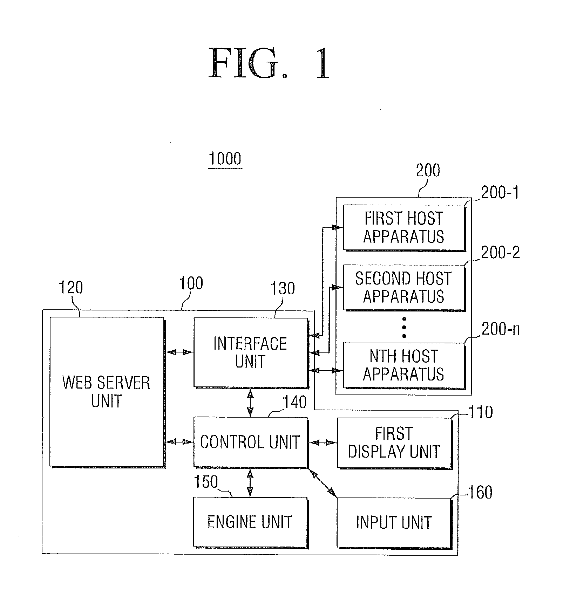

FIG. 1 is a view illustrating an image forming apparatus according to an exemplary embodiment. Referring to FIG. 1, an image forming system 1000 includes an image forming apparatus 100 and at least one host apparatus 200.

The image forming apparatus 100 and the at least one host apparatus 200 have interface respectively, and may be interfaced wired or wirelessly through each interface unit 130, 220 and from the Internet or an Intranet.

At least one host apparatus 200 may be a host personal computer (PC). Alternatively, at least one host apparatus may be a mobile apparatus, such as a cellular phone, a personal digital assistant (PDA), or a portable media player (PMP) having an engine which is capable of transmitting various image forming job commands to the image forming apparatus 100. At least one host apparatus 200 may connect to the image forming apparatus 100 using an IP address applied to the image forming apparatus 100.

The image forming apparatus 100, according to an exemplary embodiment includes a first display unit 110, a web server unit 120, an interface unit 130, a control unit 140, an engine unit 150, and an input unit 160.

The first display unit 110 displays user interface (UI) contents. The first display unit 110 may be a local user interface (LUI), and preferably be a graphic user interface (GUI). The second display unit 210 formed on the at least one image forming apparatus 200 may be remote user interface (RUI), corresponding to the first display unit 110 of the image forming apparatus 100.

The first display unit 110 may be a screen having an operating panel disposed in one portion of the image forming apparatus 100. The first display unit 110 may perform the operation of the input unit 160, which will be explained later, which receives a user's command using an operating panel or a touch screen, for example.

The web server unit 120 generates UI contents displayed on the first display unit 110, that is, the graphic user interface (GUI) of the image forming apparatus 100 using a web-based language. Since the web server unit 120 generates UI contents using a web-based language, the first display unit 110 of the image forming apparatus 100 may be displayed using a web browser.

Since the image forming apparatus 100 transmits the UI contents generated by the web server unit 120 to at least one external host apparatus 200 according to a request by the at least one host apparatus 200, the screen provided by the at least one external host apparatus 200 (that is, the second display unit 210 which will be explained later) may be displayed in the same way as the screen of the first display unit 110 provided by the image forming apparatus 100.

The UI contents include an image, text, and tag forming a web browser. The web browser may be, for example, MSIE, Firefox, Opera, CHrome, Safari, Maemo, Android, LiMo, etc. The web-based language may be, for example, HTML, XML, JSP, ASP, PHP, or a web-based language for a rich internet application (RIA) such as Flex, JavaFX, etc.

That is, the web server unit 120 is not a web server for external RUI, but a web server for internal LUI which is disposed in one portion of the image forming apparatus 100.

The web server 120 may generate not only local user interface (UI) contents using a web-based language, but also contents forming a UI screen using such languages as C or JAVA, which is a related art method of generating UI contents.

In addition, as opposed to the description in the drawing, the web server unit 120 may be disposed outside of the image forming apparatus 100.

The interface unit 130 interfaces at least one host apparatus 200 having a web browser with the image forming apparatus 100. Specifically, the interface unit 130 may receive a user's command from the connected host apparatus 200. In addition, the interface unit 130 may transmit the result of operation of the image forming apparatus 100 performed according to the user's command to the connected host apparatus 200.

Accordingly, the image forming apparatus 100 may transmit and/or receive information to and from the host apparatus through the interface unit 130 wired or wirelessly.

If the web server unit 120 is disposed outside of the image forming apparatus 100, the interface unit 130 may transmit UI contents to the external web server unit 120. In this case, the UI contents may be converted into a file in an executable format, and then be transmitted to the web server unit 120. Accordingly, at least one host apparatus 200 may download the UI contents in an executable format which is provided by the web server unit 120 and install them on the at least one host apparatus 200.

The control unit 140 controls the overall operation of the image forming apparatus 100.

If at least one host apparatus 200 connects to the web server unit 120 and requests the same UI contents as those displayed on the GUI of the image forming apparatus 100, the control unit 140 may control the interface unit 130 to provide the requested UI contents to the connected host apparatus 200.

If at least one host apparatus 200 connects to the image forming apparatus 100, the control unit 140 may control the interface unit 130 to monitor the real-time operation status of the image forming apparatus 100 and to transmit information regarding the operation status of the image forming apparatus 100 to the host apparatus 200.

Once a user's command is input through the second display unit 210 of at least one host apparatus 200, which will be explained later, or the input unit 250, and the user's command is received through the interface unit 130, the control unit 140 may control the image forming apparatus 100 to operate according to the user's command.

The user's command may include at least one of operating a job executable by the image forming apparatus 100, and editing of a predetermined setting value of the image forming apparatus 100.

In this case, the job executable by the image forming apparatus 100 may include scanning, printing, copying, faxing, scanning to e-mail, scanning to save, and scanning to USB.

For example, if a user's command to performing printing is input through the second display unit 210 of at least one host apparatus 200, the engine unit 140 may be controlled to perform printing.

Subsequently, the control unit 140 may control the interface unit 130 to notify at least one host apparatus 200 of the result of the operation according to the user command to perform printing, such as, a message informing success of printing, printing time, or the number of papers printed.

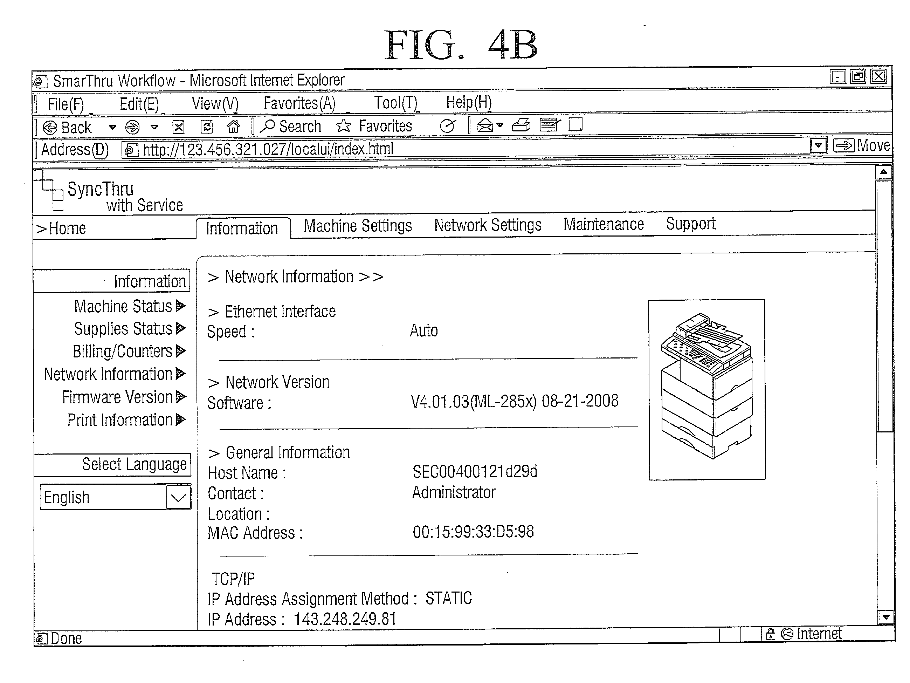

The editing of a setting value may be at least one of viewing, correcting, storing, and executing a setting value. Specifically, the editing of a setting value may be performed using information, machine setting, networking setting, maintenance, and support in FIG. 4B, which will be explained later.

For example, whether to notify the occurrence of an event in the image forming apparatus 100 to at least one host apparatus 200, or if so, how frequently the notification will be made, is edited in the second display unit 210, the image forming apparatus 100 may operate according to the result of editing.

If the event management unit 125, which will be explained later, notifies of the occurrence of an event, the control unit 140 controls the interface unit 130 to transmit the information regarding the event to at least one host apparatus 200 so that the information regarding the notified event may be displayed on the second display unit 210 of at least one host apparatus 200.

If at least one host apparatus 200 connects to the image forming apparatus 100 using a web browser, the control unit 140 controls the web server unit 120 to authenticate the connected host apparatus 200. If the host apparatus 200 fails to be authenticated, the host apparatus 200 may not be connected to the image forming apparatus 100. If the host apparatus 200 is successfully authenticated, the host apparatus 200 is registered (that is, stored) in the image forming apparatus 100.

In this case, various known algorithms may be applied for the authentication of al east one host apparatus 200.

The engine unit 150 performs various image forming jobs, including printing, copying and scanning.

The input unit 160 receives a user's command. In general, the first display unit 110 and the input unit 160 may perform operations together, but the input unit 160 may be formed separately.

Therefore, according to the present image forming system 1000, a user may perform various functions including an image forming job provided by the first display unit 110 of the image forming apparatus 100 and editing of a setting value directly in at least one host apparatus 200 without approaching the image forming apparatus 100, and thus user convenience may be enhanced.

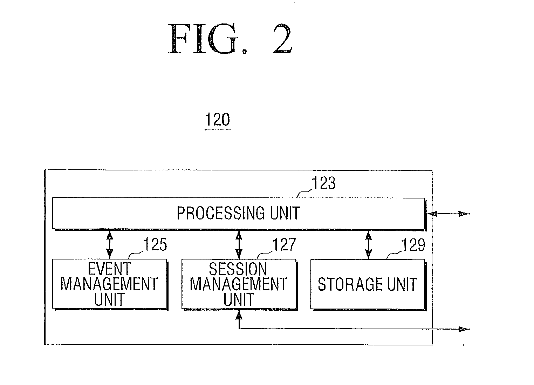

FIG. 2 is a view illustrating a web server unit in greater detail.

Referring to FIG. 2, the web server unit 120 includes a processing unit 123, an event management unit 125, a session management unit 127, and a storage unit 129. The processing unit 123 generates UI contents displayed on the GUI using a web-based language. In addition, the processing unit 123 may parse a web-based language which is not in a HTML format to be in a HTML format.

The processing unit 123 manages overall operations of the event management unit 125, the session management unit 127, and the storage unit 129.

The event management unit 125 manages various events occurring in the image forming apparatus 100. The event management unit 125 notifies an event according to a user's command received from at least one host apparatus 200 to the engine unit 159, which will be explained later, and checks an event occurring in the image forming apparatus 100.

The occurred event in the image forming apparatus 100 may be transmitted to the host apparatus 200 connected to the image forming apparatus 100 in real time through the interface unit 130.

The session management unit 127 manages at least one host apparatus 200 connected to the image forming apparatus 100. Specifically, the session management unit 127 identifies at least one host apparatus 200 connected to the image forming apparatus 100, and manages history information regarding the host apparatus 200 which was previously connected to the image forming apparatus 100.

In addition, if at least one host apparatus 200 is connected to the web server unit 120, the session management unit 127 may authenticate the connected host apparatus 200, register the connected host apparatus 200 in the session management unit 120 according to the authentication result, and identifies connection status of the currently connected host apparatus 200 periodically.

The storage unit 129 stores UI contents generated from the processing unit 123. The storage unit 129 may store various information including an IP address of the image forming apparatus 100, an event occurred in the image forming apparatus 100 or received from the image forming apparatus 100, history, the registered image forming apparatus 100, an address book, an e-mail, and scanned data.

Unlike in FIG. 2, the storage unit 129 may be disposed outside of the web server unit 120.

As such, the web server unit 120 of the image forming apparatus 100 may generate UI contents using a web-based language, and thus an easy and simple web-based language may be used when an application developed by a third party in an open source environment, that is, UI contents are added to the image forming apparatus 100.

Unlike in FIG. 2, the interface unit 130 may be included in the web server unit 120, and accordingly, the web server unit 120 may directly communicate with at least one host apparatus 200. Furthermore, the interface unit 130 may be included in the session management unit 127.

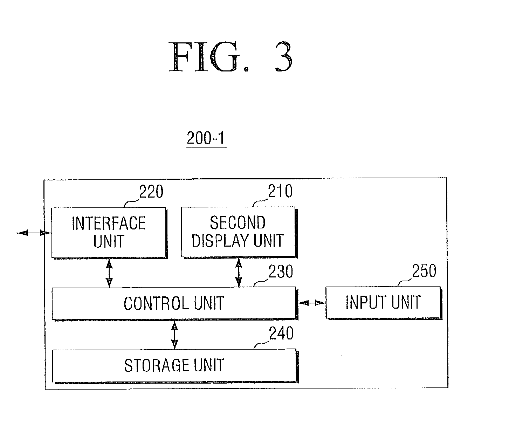

FIG. 3 is a view illustrating a host apparatus according to an exemplary embodiment.

Referring to FIG. 3, the host apparatus 200-1 includes a second display unit 210, an interface unit 220, a control unit 230, a storage unit 240, and an input unit 250. The host apparatus 200-1 may be one of at least one host apparatus 200.

The second display unit 210 displays UI contents on a web browser.

The second display unit 210 may receive a user's command in the form of a touch screen or through various input apparatuses, such as a keyboard of the host apparatus 200-1 and a mouse. That is, the second display unit 210 may also perform the operation of the input unit 250, which will be explained later.

The interface unit 220 may transmit/receive information to and from the image forming apparatus 100 through wire or wirelessly. Specifically, if the host apparatus 200-1 connects to the web server unit 120 of the image forming apparatus 100 using a web browser, the interface unit 220 receives UI contents which are generated using a web-based language from the web server unit 120.

The host apparatus 200-1 may connect to the web server unit 120 of the image forming apparatus 100 through the interface unit 220 as the IP address of the web server unit 120 is input into one portion of the second display unit 210 of the host apparatus 200-1 having a web browser.

The control unit 230 controls overall operation of the host apparatus 200-1. Specifically, the control unit 230 controls the second display unit 210 to display the received UI contents on the web browser. Accordingly, the UI contents received from the host apparatus 200 may be displayed on the second display unit 210 in the same way as the UI contents displayed on the GUI of the first display unit 110 of the image forming apparatus 100 using a web-based language.

The control unit 230 controls the interface unit 220 to transmit a signal to operate the image forming apparatus 100 in accordance with the UI contents displayed on the second display unit 210 according to the user's command.

The control unit 230 controls the second display unit 210 to receive the operation result of the image forming apparatus 100 which is operated according to the user's command and display the received operation result on the second display unit 210.

The storage unit 240 stores received UI contents. In addition, the storage unit 240 may store various information including information regarding an event and editing of a setting value.

The input unit 250 may include various input apparatuses including a key board, a mouse, and a stylus pen, and receive a user's command.

Accordingly, a user may e-mail scanned data through the host apparatus 200-1 which is connectable to the image forming apparatus 100, or may connect to information, such as an address book and scanned data, which is stored in the image forming apparatus 100, without approaching the image forming apparatus 100, and thus user convenience may be enhanced.

In addition, various events occurring in the image forming apparatus 100, such as whether or not fax data is received, the type of occurred problem in an apparatus, and whether or not papers should be further supplied may be checked at the host apparatus 200-1 in real time, so user convenience may be enhanced.

Since the web server unit 120 of the image forming apparatus 100 generates UI contents using a web-based language, the host apparatus 200-1 may connect to the image forming apparatus 100 using only a web browser without further adding an application (status monitor) or generating contents for RUI.

In addition, a developer may check a screen provided by the second display unit 210 of the host apparatus 200-1 without checking a screen provided by the first display unit 110. Therefore, developer-friendly environment may be provided.

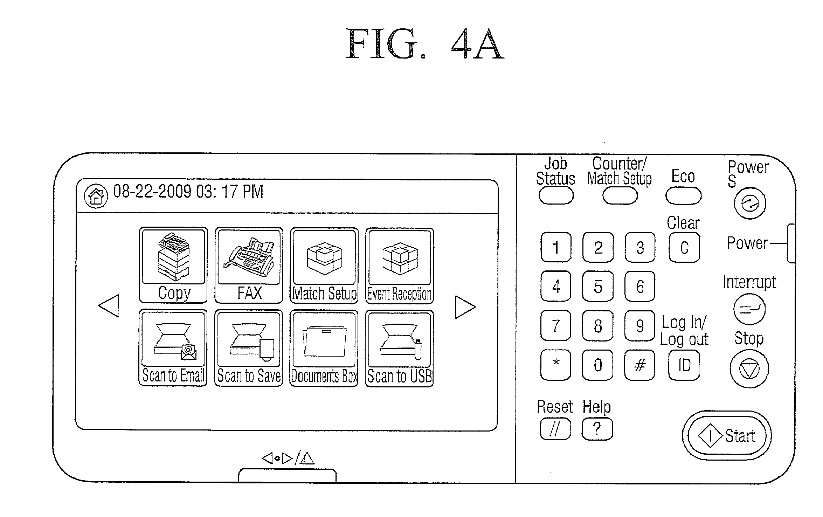

FIG. 4A to FIG. 4C are views illustrating various UI screens.
FIG. 4A illustrates the first display unit disposed in one portion of the image forming apparatus 100 according to an exemplary embodiment.

Referring to FIG. 4A, the first display unit 110 disposed in one portion of the image forming apparatus 100 may be realized using a web-based language or using a language, such as C or JAVA, which are used in the related art. However, it is desirable that the first display unit 110 disposed in one portion of the image forming apparatus 100 is displayed on a web browser using a web-based language.

Unlike in FIG. 4A, the first display unit 110 may display an address window to input an IP address.

FIG. 4B illustrates a screen provided in a conventional remote user interface (RUI) form. Conventionally, various setting values of an image forming apparatus may be checked or changed in the screen provided by a host apparatus in a RUI form.

However, the functions to perform image forming jobs, such as copying, scanning, or transmitting an email after scanning provided by a UI screen of an image forming apparatus, that is a display unit, cannot be performed on a screen illustrated in FIG. 4B.

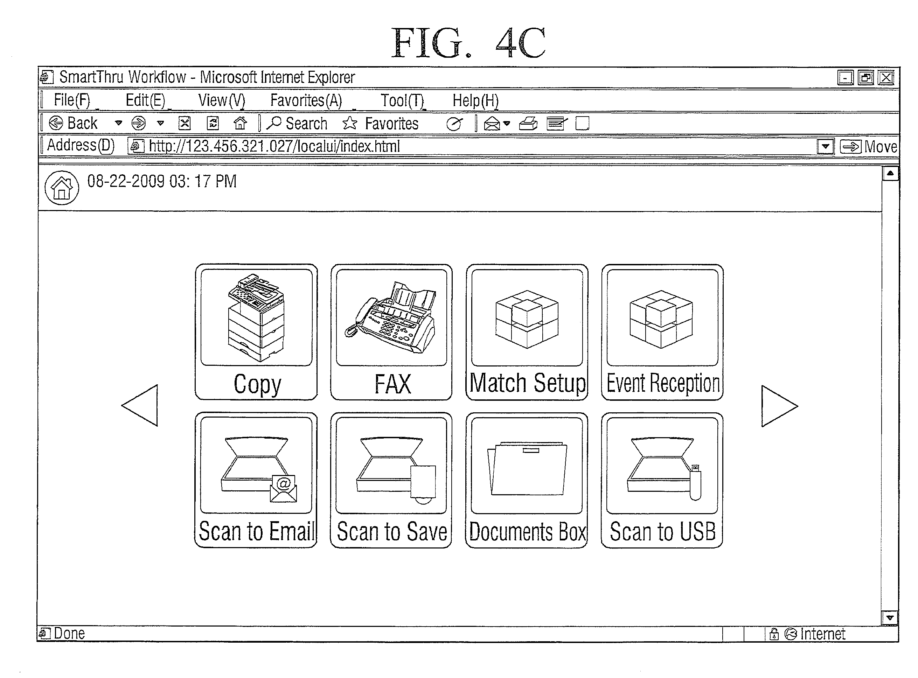

FIG. 4C illustrates the UI screen of a host apparatus according to an exemplary embodiment. According to the present image forming apparatus 100, the UI contents displayed on the first display unit 110 disposed in one portion of the image forming apparatus 100 as illustrated in FIG. 3A is the same as the UI contents of the second display unit 210 of the host apparatus 200-1 as illustrated in FIG. 4C.

As illustrated in FIG. 4C, the UI contents which are the same as the UI contents of the first display unit 110 may be displayed on the second display unit 210 as the IP address of the image forming apparatus 100 is input to the URL area of a web browser to be connected.

According to various exemplary embodiments, the UI contents displayed on the second display unit 210 of the host apparatus 200-1 may be set to be the same as the UI contents displayed on the first display unit 110. To do this, the first display unit 110 of the image forming apparatus 100 and the second display unit 210 of the host apparatus 200-1 may be displayed using a web language-based web browser.

However, the first display unit 110 of the image forming apparatus 100 may be realized using a language such as C or JAVA, and the second display unit 210 of the host apparatus 200-1 may be realized using a web-based language.

Accordingly, a user may perform various functions to perform image forming jobs provided by the first display unit 110 of the image forming apparatus 100 directly in the host apparatus 200 and edit various setting values of the image forming apparatus 100 without approaching the image forming apparatus 100, and thus user convenience may be enhanced.

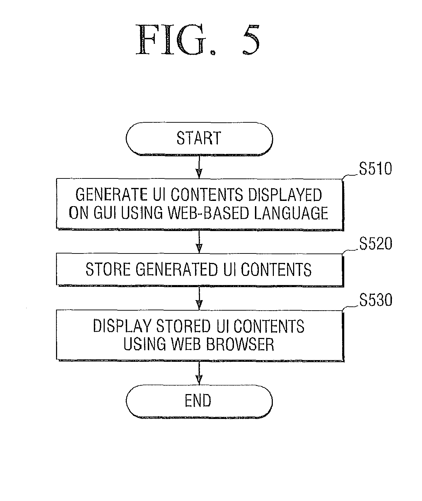

FIG. 5 is a flow chart illustrating a method of providing UI contents of an image forming apparatus according to an exemplary embodiment.

Referring to FIG. 5, a method of providing UI contents of an image forming apparatus includes generating UI contents to be displayed on GUI using a web-based language (S510), and storing the generated UI contents (S520).

Subsequently, the stored UI contents are displayed using a web browser (S530).

According to the present method of providing UI contents of the image forming apparatus, therefore, UI contents to be displayed on GUI may be generated using a web-based language and the generated UI content may be displayed. Thus, the host apparatus 200 may connect to the image forming apparatus 100 using only a web browser without further adding an application (status monitor) or generating contents for RUI. Consequently, the UI contents of the first display unit 110 of the image forming apparatus 100 may be displayed in the second display unit 210 of the host apparatus 200 in the same manner.

The method of providing UI contents of the image forming apparatus further includes, if at least one host apparatus 200 connects to the web server unit 120 using a web browser, requests the same UI contents as those displayed on GUI, providing the requested UI contents to the connected host apparatus 200.

The method of providing UI contents of the image forming apparatus further includes receiving a user's command from the connected host apparatus 200 and controlling the image forming apparatus 100 to operate corresponding to the UI contents displayed on the second display unit 210 according to the received user command.

In addition, the method of providing UI contents of the image forming apparatus further includes transmitting operation result of the image forming apparatus 100 according to the user command to the connected host apparatus 200.

The method of providing UI contents of the image forming apparatus further includes, if at least one host apparatus 200 connects to the web server unit 120 using a web browser, authenticating the connected host apparatus 200 and registering the authenticated host apparatus 200.

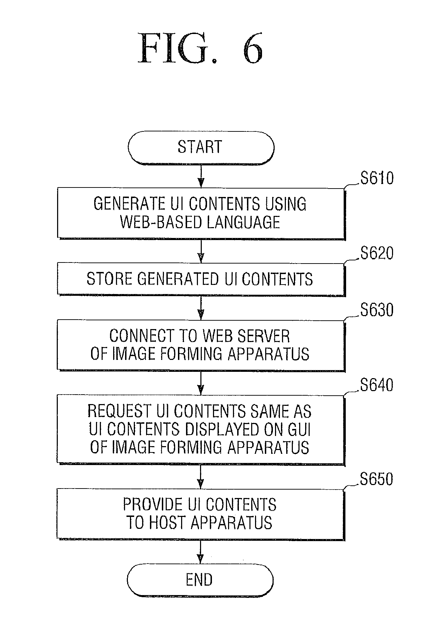

FIG. 6 is a flow chart illustrating a method of providing UI contents of the image forming apparatus according to an exemplary embodiment.

Referring to FIG. 6, a method of providing UI contents of the image forming apparatus includes generating UI contents to form the UI screen of the image forming apparatus 100 using a web-based language by the web server unit 120 of the image forming apparatus 100 (S610).

The generated UI contents are stored in the storage unit 129 (S620).

Subsequently, the host apparatus 200 connects to the web server unit 120 of the image forming apparatus 100 using a web browser (S630).

The host apparatus 200 requests the same UI contents as those displayed on the GUI of the image forming apparatus 100 (S640).

For example, the host apparatus 200 may connect to the web server unit 120 through an IP address of the web server 120 of the image forming apparatus 100, http://123.123.123.123/localui.html and request UI contents.

The interface unit 130 of the image forming apparatus 100 transmits the requested UI contents to the host apparatus 200 (S650).

The provided UI contents may be displayed on a web browser driven by the second display unit 210 of the host apparatus 200.

The UI contents displayed on the GUI of the image forming apparatus 100 using a web-based language and the UI contents that the image forming apparatus 100 provides to the host apparatus 200 that may be displayed on the second display unit 210 of the host apparatus 200 are displayed in the same manner.

The image forming apparatus 100 may operate according to a user's input corresponding to the UI contents displayed on the second display unit 210.

The user's command may include operating at least one job executable by the image forming apparatus 100, including editing of a predetermined setting value of the image forming apparatus 100.

The editing of setting values may be at least one of viewing, changing, storing, and performing a setting value.

The image forming apparatus 100 may transmit the operation result of the image forming apparatus 100 which operates according to a user's command to the host apparatus 200 through the interface unit 130.

Once a user's command is input from the host apparatus 200, the first display unit 210 of the image forming apparatus 100 may display that the operation is performed according to the input from the host apparatus 200.

Accordingly, the host apparatus 200 may perform operations, such as approaching the contents pre-stored in the image forming apparatus 100, and thus user convenience may be improved. In addition, a user may connect to the image forming apparatus 100 easily using a browser without using a separate application or RUI. Moreover, since a simple and easy web-based language is used, a UI screen can be upgraded according to the user's intention.

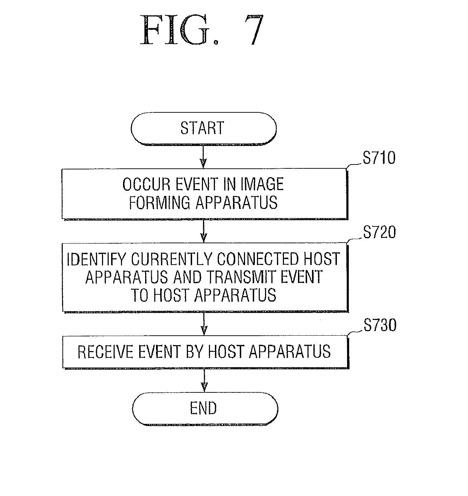

FIG. 7 is a flow chart illustrating a method of processing an occurred event in an image forming apparatus according to an exemplary embodiment.

According to the method of processing an occurred event in an image forming apparatus, if an event occurs in the image forming apparatus 100 (S710), the currently connected host apparatus 200 is identified and the occurred event is transmitted to the host apparatus 200 (S720).

The host apparatus 200 receives the event through the second display unit 210 which is the same as the first display unit 110 of the image forming apparatus 100 (S730). That is, the host apparatus 200 may notify the occurrence of an event through a flickering 'event occurrence' key, as illustrated in FIG. 4C.

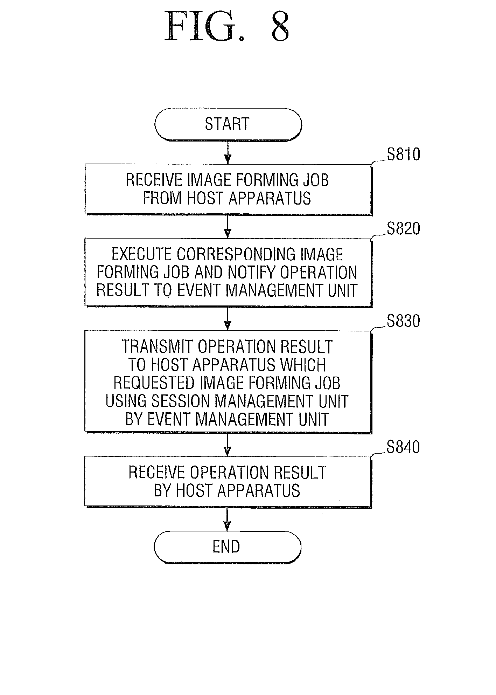

FIG. 8 is a flow chart illustrating a method of processing an image forming job requested by a host apparatus according to an exemplary embodiment.

According to the method of processing an image forming job requested by a host apparatus, the image forming apparatus 100 receives an image forming job from the host apparatus 200 (S810).

The host apparatus 200 may receive a user's to process the image forming job at the second display unit 210 which performs operation corresponding to the first display unit 110 of the image forming apparatus 100.

Accordingly, the image forming apparatus 100 performs the image forming job corresponding to the user's command and notifies the event management unit 125 of the operation result (S820).

The event management unit 125 identifies the host apparatus 200 which requested the image forming job through the session management unit 127 and transmits the operation result (S830). Subsequently, the host apparatus 200 receives the operation result (S840).

In this case, the host apparatus 200 may receive the event (that is, the operation result) through the second display unit 210 which performs operation corresponding to the first display unit 110 of the image forming apparatus 100.

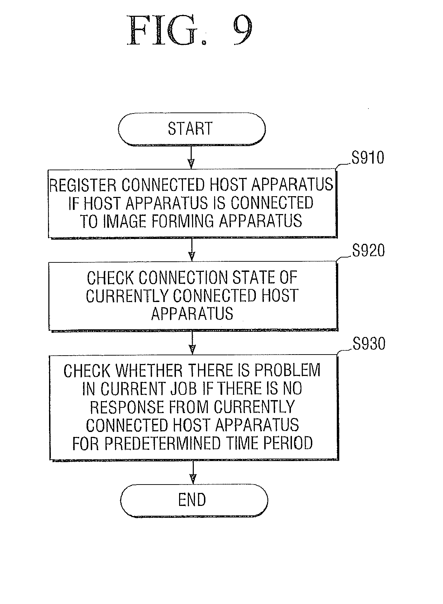

FIG. 9 is a flow chart illustrating operation performed by the session management unit.

Referring to FIG. 9, if at least one host apparatus 200 connects to the web server unit 120, the session management unit 127 registers the connected host apparatus 200 in the session management unit 127 (S910).

In addition, the session management unit 127 periodically checks connection status of the currently connected host apparatus 200 (S920).

Subsequently, if there is no response from the currently connected host apparatus 200 for a predetermined time period, the session management unit 127 checks whether there is a problem in the job which is currently being performed (S930). Accordingly, the session management unit 127 may manage resources designated to the connected host apparatus 200.

The method of providing the UI contents of an image forming apparatus or the method of providing the UI contents of an image forming system, according to an exemplary embodiment, may be realized using a single processor performing the function of each step or a chip.

The present embodiments may include a computer reading and recording medium having a program to perform the method of providing the UI contents of an image forming apparatus or the method of providing the UI contents of an image forming system. The computer reading and recording medium includes all kinds of recording apparatuses which store data readable by a computer system. The examples of the computer reading and recording medium include a ROM, a RAM, a CD-ROM, a magnetic tape, a floppy disk, and an optical data storing apparatus. The computer reading and recording medium is distributed to a computer system connected through a network, and a code readable by a computer through a distribution method may be stored and performed.

Although a few embodiments have been shown and described, it would be appreciated by those skilled in the art that changes may be made in this embodiment without departing from the principles of the invention, the scope of which is defined in the claims.

## Claims

1. An image forming apparatus which is connectable to at least one host apparatus, the image forming apparatus comprising:
an interface unit to interface at least one host apparatus with the image forming apparatus;
a web server unit to generate UI contents displayed on a graphical user interface (GUI) using a web-based language and store the generated UI contents; and
a first display unit to display the stored UI contents using a web browser.

2. The image forming apparatus according to claim 1, further comprising:
a control unit, when the at least one host apparatus connects to the web server unit using the web browser and requests same user interface (UI) contents displayed on the GUI, to control the interface unit to provide the requested UI contents to the connected host apparatus.

3. The image forming apparatus according to claim 2, wherein the UI contents displayed on the GUI and the UI contents provided to the connected host apparatus are displayed on a second display unit of the connected host apparatus in the same manner.

4. The image forming apparatus according to claim 3, wherein the interface unit receives a user's command from the connected host apparatus,
wherein the control unit controls the image forming apparatus to operate to correspond to the UI contents displayed on the second display unit according to the received user's command.

5. The image forming apparatus according to claim 4, wherein the user's command includes at least one of performing a job executable by the image forming apparatus and editing a predetermined setting value of the image forming apparatus.

6. The image forming apparatus according to claim 5, wherein the editing of the setting value is at least one of viewing, changing, storing, and performing the setting value.

7. The image forming apparatus according to claim 4, wherein the control unit controls the interface unit to transmit an operation result of the image forming apparatus operated according to the user command to the connected host apparatus.

8. The image forming apparatus according to claim 1, wherein the web server unit, if the at least one host apparatus is connected, is arranged to register the connected host apparatus and to check connection status of the registered host apparatus periodically.

9. The image forming apparatus according to claim 8, wherein the web server unit authenticates the connected host apparatus and registers the authenticated host apparatus.

10. A method of providing UI contents of an image forming system which is connectable to at least one host apparatus, comprising:
generating UI contents displayed on GUI using a web-based language;
storing the generated UI contents; and
displaying the stored UI contents using a web browser.

11. The method according to claim 10, further comprising:
if the at least one host apparatus connects to the web server unit using a web browser and requests same UI contents displayed on the GUI, providing the requested UI contents to the connected host apparatus.

12. The method according to claim 11, wherein the UI contents displayed on the GUI and the UI contents provided to the connected host apparatus are displayed on a second display unit of the connected host apparatus in a same manner.

13. The method according to claim 12, further comprising:
receiving a user's command from the connected host apparatus; and
controlling the image forming apparatus to operate to correspond to UI contents displayed on the second display unit according to the received user's command.

14. The method according to claim 13, wherein the user's command includes at least one of performing a job executable by the image forming apparatus and editing a predetermined setting value of the image forming apparatus.

15. The method according to claim 10, further comprising;
if the at least one host apparatus connects to the web server unit using a web browser, registering the connected host apparatus; and
checking connection status of the registered host apparatus periodically, wherein the registering comprises authenticating the connected host apparatus and registering the authenticated host apparatus.
